# DEMANDE DE BREVET EUROPEEN

(11) **EP 4 375 523 A1**
(43) Date de publication de la demande: **29.05.2024**
(21) Numéro de dépôt: 23210535.3
(22) Date de dépôt: 17.11.2023
(51) Int. Cl.: F16C 17/02, F16C 33/10, F16H 57/08

(54) **PALIER LISSE POUR UN SATELLITE D'UN REDUCTEUR MECANIQUE DE TURBOMACHINE D AERONEF**

(30) Priorité: 24.11.2022 FR 2212241
(71) Demandeur: Safran Transmission Systems, 92700 Colombes (FR)
(72) Inventeur: PELTIER, Jordane Emile André, 77550 MOISSY-CRAMAYEL (FR); GHRIBI, Dhafer, 77550 MOISSY-CRAMAYEL (FR); PAP, Bálint, 77550 MOISSY-CRAMAYEL (FR); PENNACINO, Antoine Jacques Marie, 77550 MOISSY-CRAMAYEL (FR)
(74) Mandataire: Gevers & Orès

(57) **Abrégé**

Palier lisse (110) pour un satellite d'un réducteur mécanique (6) de turbomachine (1), en particulier d'aéronef, ce palier lisse (110) étant formé d'une seule pièce et comportant :
- un corps cylindrique creux (20b) qui comprend un axe (Y) et qui définit intérieurement une cavité (10c) destinée à recevoir de l'huile,
- une paroi annulaire (20a) qui s'étend autour de l'axe (Y) et du corps creux (20b) et qui comprend une surface cylindrique externe de guidage (25a),
- une âme annulaire (20c) qui s'étend autour de l'axe (Y), entre le corps (20b) et la paroi (20a),
où il comprend au moins une rangée annulaire de trous d'allègement (122) dans ladite âme (20c), ces trous (122) étant régulièrement répartis tout autour de l'axe (Y).

## Description

### Domaine technique de l'invention

La présente invention concerne le domaine des réducteurs mécaniques pour des turbomachines en particulier d'aéronef.

### Arrière-plan technique

L'état de l'art comprend notamment les documents FR-A1-3 071 022, FR-A1-3 071 023, FR-A1-3 095 252, FR-A1-3 071 024 et EP-A1-4 056 829.

Le rôle d'un réducteur mécanique est de modifier le rapport de vitesse et de couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution Y différent, ils sont équirépartis sur le même diamètre de fonctionnement autour de l'axe des planétaires. Ces axes Y sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent comprendre un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron. Un réducteur doit être lubrifié et l'apport d'huile de lubrification aux composants tournants d'un réducteur peut être problématique. L'huile est en général amenée au réducteur par un distributeur d'huile de lubrification.

Les satellites sont guidés en rotation par des paliers qui sont lubrifiés. Les paliers peuvent être composés d'éléments roulants (roulements à billes, à rouleaux, à rouleaux coniques, etc.) ou peuvent être des paliers lisses ou hydrodynamiques. Dans ce dernier cas, chaque satellite est monté rotatif sur et autour d'un palier lisse, qui est alimenté en huile et qui est configuré pour former un film d'huile entre la périphérie externe du palier et la périphérie interne du satellite. Pour cela, dans la technique actuelle, chaque satellite comprend une surface cylindrique interne qui s'étend autour d'une surface cylindrique externe du palier et qui délimite avec cette dernière un espace annulaire de formation du film d'huile. Cet espace est alimenté en huile par des orifices de passage d'huile qui sont formés dans le palier et s'étendent depuis la surface cylindrique externe jusqu'à une cavité interne du palier qui est alimentée en huile par le distributeur précité.

La présente demande concerne un réducteur dont les satellites sont guidés par des paliers lisses de ce type.

Un palier lisse de la technique antérieure présente une forme lui conférant un bon compromis entre une rigidité suffisante pour guider les satellites et une souplesse suffisante pour amortir une partie des efforts transmis par les dentures des satellites et éviter de transmettre l'intégralité de ces efforts au porte-satellites.

Toutefois, un palier lisse de la technique antérieure présente des inconvénients liés à sa masse. Les paliers lisses sont des éléments massiques du réducteur dont le nombre est généralement compris entre trois et sept. En plus d'avoir un impact sur la masse de la turbomachine, ces paliers orbitent autour de l'axe du solaire ce qui engendre de nombreuses conséquences néfastes tels que du balourd, des vibrations à forte amplitude et des efforts radiaux sur le porte-satellite, ce qui peut générer des désalignements entre le solaire, les satellites et la couronne. Un palier en orbite vient cisailler l'huile ce qui engendre des pertes, notamment des pertes de frottement du palier dans la zone de rupture du film d'huile. L'huile chaude ne peut pas être évacuée par le coté peu chargée du palier et cette huile chaude non évacuée dès la première rotation a tendance à réchauffer l'huile froide sortant des orifices de passage d'huile, ce qui empêche le palier d'évacuer correctement les calories.

La présente invention propose un perfectionnement simple, efficace et économique pour réduire la masse d'un palier lisse pour un réducteur mécanique.

### Résumé de l'invention

L'invention concerne un palier lisse pour un satellite d'un réducteur mécanique de turbomachine, en particulier d'aéronef, ce palier lisse étant formé d'une seule pièce et comportant :
- un corps cylindrique creux qui comprend un axe et qui définit intérieurement une cavité destinée à recevoir de l'huile,
- une paroi annulaire qui s'étend autour de l'axe et du corps creux et qui comprend une surface cylindrique externe de guidage,
- une âme annulaire qui s'étend autour de l'axe, entre le corps et la paroi, et qui relie le corps à la paroi, cette âme annulaire ayant une longueur le long de l'axe qui est inférieure à une longueur de la paroi de sorte que la paroi délimite autour du corps un espace annulaire en avant de l'âme et un espace annulaire en arrière de l'âme, et
- des orifices de passage d'huile formés dans le corps, l'âme et la paroi et s'étendant depuis la cavité jusqu'à la surface de guidage,
caractérisé en ce qu'il comprend au moins une rangée annulaire de trous d'allègement dans ladite âme, ces trous étant régulièrement répartis tout autour de l'axe.

L'invention propose ainsi de prévoir des trous d'allègement dans le palier lisse. Les trous ont ainsi une fonction d'allègement et c'est de préférence la seule fonction de ces trous. Ils sont donc configurés pour alléger, et donc diminuer la masse, du palier lisse. Les trous sont situés dans un endroit précis du palier lisse, à savoir son âme. Ils sont régulièrement répartis autour de l'axe si bien que leur disposition autour de cet axe ne répond pas à des critères particuliers tels que la répartition de la charge autour du palier lisse par exemple. Dans la technique antérieure citée dans ce qui précède, on a déjà proposé de faire des trous dans l'âme du palier lisse. Cependant, ces trous n'ont pas la même fonction et ne sont pas distribués de manière régulière autour de l'axe du palier.

La solution proposée ci-dessous est compatible d'un réducteur épicycloïdal, planétaire ou différentiel. Elle est compatible de tout type de porte-satellites, qu'il soit monobloc ou de type cage-porte / cage. Elle est compatible d'un réducteur simple étage ou à plusieurs étages. Elle est compatible de dentures droites, hélicoïdales ou en chevron.

Le réducteur selon l'invention peut comprendre une ou plusieurs des caractéristiques suivantes, prises isolément les unes des autres, ou en combinaison les unes avec les autres :
-- les trous d'allègement sont uniquement réalisées dans ladite âme ;
-- les trous d'allègement ont tous une orientation essentiellement axiale, c'est-à-dire parallèle ou quasi parallèle audit axe ;

- l'âme comprend une seule rangée annulaire de trous d'allègement qui traversent toute la longueur de l'âme et débouchent dans lesdits espaces ;
- l'âme comprend une première rangée annulaire de trous borgnes d'allègement qui sont formés sur un premier côté de l'âme, avant ou arrière, et qui débouchent dans un premier desdits espaces, et une seconde rangée annulaire de trous borgnes d'allègement qui sont formés sur un second côté opposé de l'âme et qui débouchent dans un second desdits espaces ;
- les trous ont une section constante sur toute leur longueur ;
- les trous ont une section qui varie le long de leur longueur, chacun des trous comportant par exemple au moins deux ou trois tronçons ayant des diamètres différents ;
- les trous ont un diamètre D2 compris entre 0,01.D1 et 0,1.D1, D1 étant le diamètre de la surface de guidage ;
- les trous ont un diamètre D2 compris entre 0,008.L3 et 0,1.L3, L3 étant la longueur du palier mesurée le long de l'axe ;
- les trous ont en section une forme circulaire, oblongue ou elliptique ;
- les trous sont parallèles à l'axe ou inclinés d'un angle maximal de +/-10° par rapport à cet axe.

L'invention concerne également un réducteur mécanique pour une turbomachine, en particulier d'aéronef, ce réducteur comportant :
- un solaire ayant un axe de rotation,
- une couronne qui s'étend autour du solaire,
- des satellites qui sont engrenés avec le solaire et la couronne et qui sont chacun montés sur un palier lisse selon l'une des revendications précédentes, les paliers lisses étant fixés à un porte-satellites, et
- un distributeur d'huile de lubrification qui est configuré pour alimenter en huile les cavités desdits paliers.

L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une vue partielle en coupe axiale d'un réducteur mécanique,
[Fig. 3] la figure 3 est vue similaire à celle de la figure 2 et représentant un mode de réalisation d'un réducteur mécanique,
[Fig. 4] la figure 4 est une vue en perspective d'un palier lisse de satellite du réducteur de la figure 3,
[Fig. 5] la figure 5 est une vue en coupe transversale du palier lisse de la figure 4,
[Fig. 6] la figure 6 est vue similaire à celle de la figure 5 et illustrant un mode de réalisation d'un palier lisse selon l'invention,
[Fig. 7] la figure 7 est une vue en coupe axiale du palier lisse de la figure 6, [Fig. 8] la figure 8 est une vue en coupe axiale d'une variante de réalisation d'un palier lisse selon l'invention,
[Fig. 9] la figure 9 est une vue en coupe axiale d'une autre variante de réalisation d'un palier lisse selon l'invention, et
[Fig. 10] la figure 10 est une vue en coupe axiale d'une autre variante de réalisation d'un palier lisse selon l'invention.

### Description détaillée de l'invention

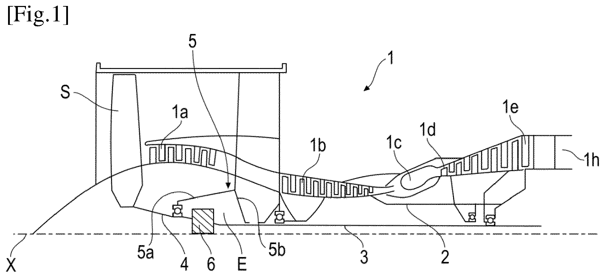

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entraîné à l'arbre BP 3 au moyen d'un réducteur 6. Ce réducteur 6 est généralement de type planétaire ou épicycloïdal.

La description qui suit qui n'est pas limitative concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Dans la présente demande, les expressions amont et aval font référence à l'écoulement général des gaz dans la turbomachine, le long de son axe d'allongement ou de rotation de ses rotors. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

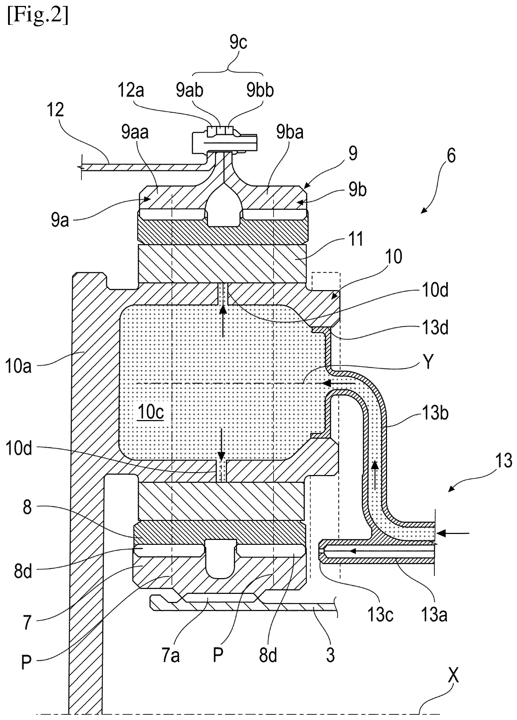

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie nous avons :
▪ Dans cette configuration épicycloïdale, l'ensemble des satellites 8 entraine en rotation le porte-satellite 10 autour de l'axe X de la turbomachine.
La couronne est fixée au carter moteur ou stator 5 via un porte-couronne 12 et le porte-satellites 10 est fixé à l'arbre de soufflante 4.
▪ Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier, qui est un palier lisse 11 ou palier hydrodynamique dans le cadre de la présente invention. Chaque palier lisse 11 est fixé au porte-satellites 10 et les paliers lisses 11 sont répartis autour de l'axe X et centrés sur les axes Y. Il existe un nombre de paliers lisses 11 égal au nombre de satellites. Pour des raisons de fonctionnement, de montage, de fabrication, de contrôle, de réparation ou de rechange, les paliers lisses 11 et le châssis 10a du porte-satellites 10 peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes :
▪ Une demi-couronne amont 9a constituée d'une jante 9aa et d'une demi-bride de fixation 9ab. Sur la jante 9aa se trouve l'hélice amont de la denture du réducteur. Cette hélice amont engrène avec une hélice de la denture 8d du satellite 8 qui engrène avec une hélice de la denture 7a du solaire 7.
▪ Une demi-couronne aval 9b constituée d'une jante 9ba et d'une demi-bride de fixation 9bb. Sur la jante 9ba se trouve l'hélice aval de la denture du réducteur. Cette hélice aval engrène avec une hélice de la denture 8d du satellite 8 qui engrène avec une hélice de la denture 7a du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval. Dans le cas d'un roulement à deux rangées de rouleaux, chaque rangée d'éléments roulants est aussi de préférence, mais pas nécessairement centrée sur deux plans médians.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier 11. L'huile circule ensuite à travers le palier lisse 11 dans une ou des cavités 10c pour ensuite ressortir par des orifices 10d afin de lubrifier les satellites.

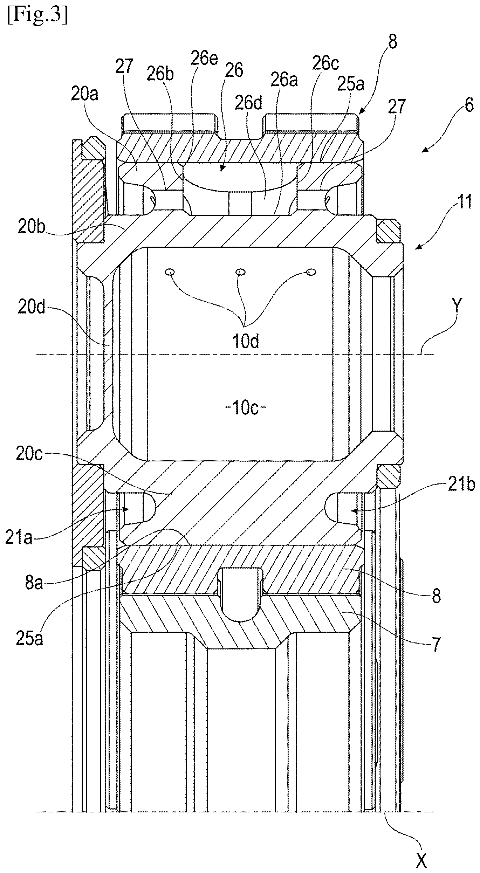

Les figures 3 à 5 représentent un exemple de réalisation d'un réducteur mécanique 6 et en particulier de l'un de ses paliers lisses 11.

Le palier lisse 11 de chaque satellite 8 comprend :
- un corps cylindrique creux 20b qui comprend un axe X et qui définit intérieurement une cavité 10c destinée à recevoir de l'huile,
- une paroi annulaire 20a qui s'étend autour de l'axe Y et du corps creux 20b et qui comprend une surface cylindrique externe de guidage 25a,
- une âme annulaire 20c qui s'étend autour de l'axe Y, entre le corps 20b et la paroi 20a, et qui relie le corps 20b à la paroi 20a, cette âme annulaire 20c ayant une longueur le long de l'axe Y qui est inférieure à une longueur de la paroi 20a de sorte que la paroi 20a délimite autour du corps 20b un espace annulaire 21a en avant de l'âme 20c et un espace annulaire 21b en arrière de l'âme 20c, et
- des orifices 10d de passage d'huile formés dans le corps 20b, l'âme 20c et la paroi 20a et s'étendant depuis la cavité 10c jusqu'à la surface de guidage 25a.

Les espaces 21a, 21b ont en section une forme générale en U dont l'ouverture débouche en direction axiale. Cette configuration permet de conférer une certaine souplesse au palier 11, au niveau de chacune de ses extrémités axiales.

La cavité 10c du corps 20b peut être fermée par une cloison 20d et a une extrémité axiale ouverte du côté opposé pour recevoir de l'huile apportée par le distributeur d'huile (non représenté). La cloison 20d et le corps 20b définissent ainsi la cavité 10c de réception de l'huile de lubrification.

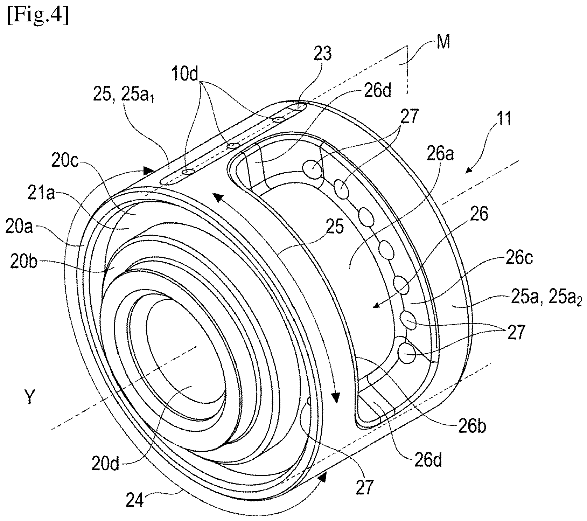

Dans l'exemple représenté, les orifices 10d sont au nombre de trois même si ce nombre n'est pas limitatif. Ils ont chacune une forme générale allongée et cylindrique. Ils sont alignés et régulièrement espacés dans un plan M passant par l'axe Y du palier 11 (figure 4).

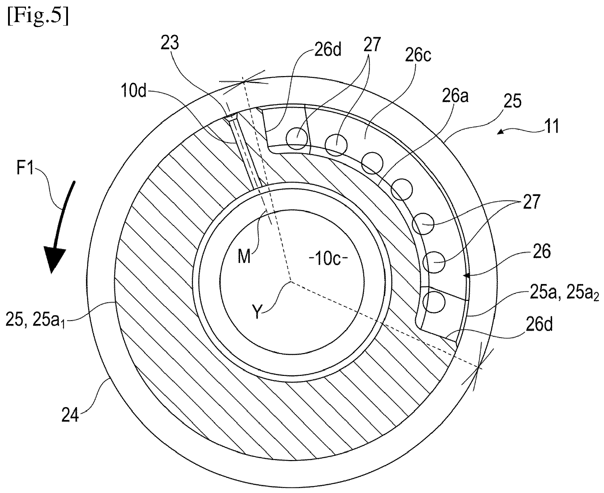

Les figures 4 et 5 permettent de constater que les extrémités radialement externes des orifices 10d peuvent déboucher dans une même rainure 23 formée sur la surface 25a du palier. Cette rainure 23 a une forme générale allongée et s'étend sensiblement dans le plan M.

Comme cela est représenté à la figure 5, le palier lisse 11 peut être considéré comme comportant ou étant constitué de deux secteurs angulaires 24, 25 s'étendant autour de l'axe Y, à savoir un premier secteur 24 de formation d'un film d'huile et un second secteur 25 de rupture du film d'huile.

De préférence, le premier secteur 24 a une étendue angulaire supérieure ou égale à celle du second secteur 25. Le premier secteur 24 peut avoir une étendue angulaire comprise 180° et 270°, et le second secteur 25 peut avoir une étendue angulaire comprise entre 90° et 180°.

Le premier secteur 24 comprend une portion 25a1 de la surface externe 25 qui est configurée pour délimiter avec une surface cylindrique interne 8a du palier 8 un espace circonférentiel de réception d'huile et de formation d'un film d'huile.

Les orifices 10d et la rainure 23 sont ici situées à une extrémité circonférentielle du secteur 24. L'huile acheminée par les orifices 10d est ainsi destinée à s'écouler circonférentiellement sur toute l'étendue du premier secteur 24. Le sens de rotation du satellite 8 sur le palier lisse 11 est choisi pour assurer la formation du film d'huile et est indiqué par la flèche F1 à la figure 5.

Le second secteur 25 comprend une portion 25a2 de la surface externe 25 qui comprend une baignoire 26 de rupture du film d'huile formé sur le secteur 24.

La baignoire 26 a une forme générale allongée en direction circonférentielle et s'étend avantageusement sur toute l'étendue circonférentielle du secteur 25. Elle est ouverte radialement vers l'extérieur et est définie radialement vers l'intérieur par une surface de fond 26a qui est incurvée autour de l'axe Y.

La baignoire 26 est délimitée axialement par deux parois latérales 26b, 26c qui s'étendent en direction circonférentielle autour de l'axe Y et qui forment la seconde surface périphérique 25a. La baignoire 26 est en outre délimitée par deux parois d'extrémité circonférentielle 26d dont une est située à proximité des canalisations d'acheminement 10d.

Des canalisations 27 d'évacuation d'huile sont formées dans le palier 11 et s'étendent entre la baignoire 26 et les espaces 21a, 21b. Ces canalisations 27 s'étendent ici parallèlement à l'axe Y et comprennent une première série qui débouchent dans le fond de l'espace 21a et sur une des surfaces latérales de la baignoire 26. Cette première série de canalisations est formée dans l'âme 20c. Une autre série de canalisations 27 traverse la paroi 26c et débouche dans le fond de l'espace 21b et sur l'autre surface latérale de la baignoire 26. Cette seconde série de canalisations est formée dans l'âme 20c.

Les canalisations 27 sont situées au voisinage de la surface de fond 26a de la baignoire 26 et sont ici réparties sur toute l'étendue circonférentielle de la baignoire.

Le film d'huile qui se forme sur la surface 24a du premier secteur 24 est destiné à être rompu au niveau de la baignoire 26 qui va collecter l'huile de ce film et l'évacuer par les canalisations 27. Cette huile, réchauffée par les cisaillements et les frottements, ne risquera donc pas de réchauffer à son tour l'huile qui sera acheminée par les orifices 10d. Le risque de mélange entre l'huile chaude et l'huile froide est donc réduit voir empêché, ce qui améliore de manière significative la lubrification du réducteur et donc le rendement du réducteur.

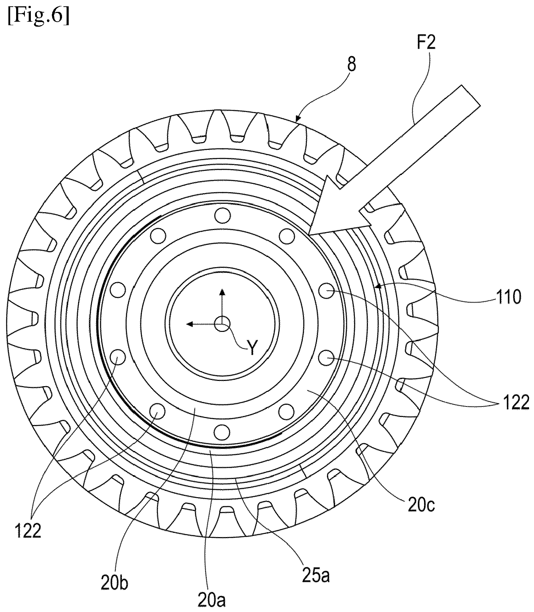

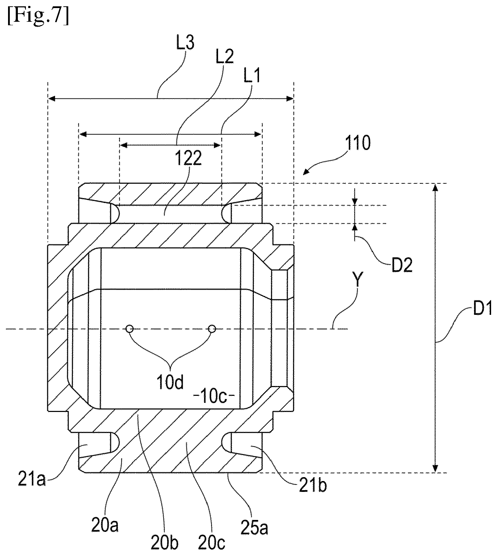

Les figures 6 et 7 illustrent un premier mode de réalisation d'un palier lisse 110 selon l'invention.

Ce palier 111 est similaire à un palier lisse 11 de la technique antérieure dans la mesure où il comprend :
- un corps cylindrique creux 20b qui comprend un axe X et qui définit intérieurement une cavité 10c destinée à recevoir de l'huile,
- une paroi annulaire 20b qui s'étend autour de l'axe Y et du corps creux 20b et qui comprend une surface cylindrique externe de guidage 25a,
- une âme annulaire 20c qui s'étend autour de l'axe Y, entre le corps 20b et la paroi 20a, et qui relie le corps 20b à la paroi 20a, cette âme annulaire 20c ayant une longueur L2 le long de l'axe X qui est inférieure à une longueur L1 de la paroi 20a de sorte que la paroi 20a délimite autour du corps 20b un espace annulaire 21a en avant de l'âme 20c et un espace annulaire 21b en arrière de l'âme 20c, et
- des orifices 10d de passage d'huile formés dans le corps 20b, l'âme 20c et la paroi 20a et s'étendant depuis la cavité 10c jusqu'à la surface de guidage 25a.

La particularité du palier lisse 110 selon l'invention est qu'il comprend en outre au moins une rangée annulaire de trous d'allègement 122 dans ladite âme 20c, ces trous 122 étant régulièrement répartis tout autour de l'axe Y. Ces trous 122 ont une fonction d'allègement et n'ont donc pas la même fonction que les canalisations 27 d'évacuation d'huile du palier lisse 11 des figures 3 à 5. Par ailleurs, ces trous 122 sont régulièrement répartis autour de l'axe Y, ce qui n'est pas le cas des canalisations 27. Cela signifie que la disposition des trous 122 ne dépend pas de la localisation de la charge (flèche F2 à la figure 6) sur le palier lisse 110 en fonctionnement.

Un palier lisse 110 dépourvu de canalisations 27 peut être équipé de trous d'allègement 122 comme dans l'exemple représenté, mais il est important de noter qu'un palier lisse 110 équipé de canalisations 27 peut également comprendre des trous d'allègement 122 au sens de l'invention.

Dans l'exemple représenté, l'âme 20c comprend une seule rangée annulaire de trous d'allègement 122 qui traversent toute la longueur L2 de l'âme 20c et débouchent dans les espaces 21a, 21b.

Le nombre de trous 122 est compris entre 5 et 30, et est de 10 dans l'exemple représenté.

Les trous 122 ont une section constante sur toute leur longueur dans l'exemple représenté. Ils ont un diamètre D2 compris entre 0,01.D1 et 0,1.D1, D1 étant le diamètre de la surface de guidage 25a. Ce diamètre D2 peut être compris entre 0,008.L3 et 0,1.L3, L3 étant la longueur du palier 110 mesurée le long de l'axe Y.

Les trous 122 ont en section une forme circulaire, oblongue ou elliptique. Ils sont parallèles à l'axe Y ou inclinés d'un angle maximal de +/-10° par rapport à cet axe Y.

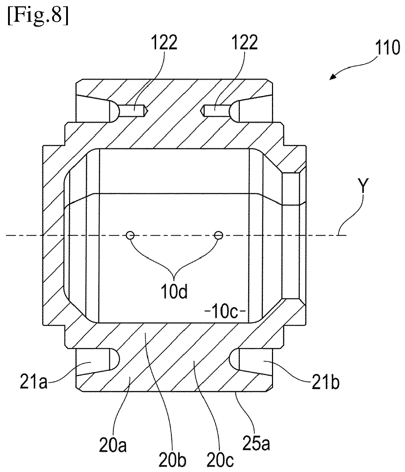

Dans la variante de réalisation de la figure 8, l'âme 20c comprend une première rangée annulaire de trous borgnes d'allègement 122 qui sont formés sur un premier côté de l'âme 20c et qui débouchent dans un premier desdits espaces 21a, et une seconde rangée annulaire de trous borgnes d'allègement 122 qui sont formés sur un second côté de l'âme 20c et qui débouchent dans un second desdits espaces 21b.

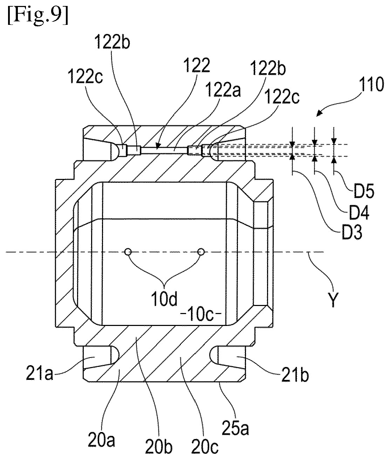

Dans la variante de réalisation de la figure 9, les trous 122 diffèrent de ceux de la figure 7 en ce que leur section varie le long de leur longueur. Chacun des trous 122 comporte par exemple cinq tronçons 122a, 122b, 122c ayant des diamètres différents, à savoir un tronçon médian 122a de diamètre D3, deux tronçons d'extrémité 122c de diamètre D5, et deux autres tronçons intermédiaires 122b disposés respectivement chacun entre le tronçon médian 122a et un des tronçons d'extrémité 122c. Ces tronçons intermédiaires 122b ont un diamètre D4, avec D3<D4<D5.

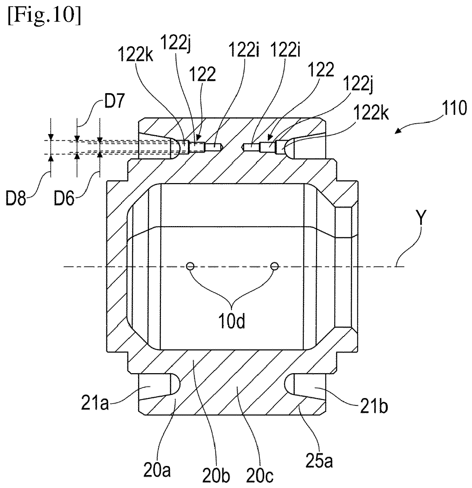

Dans la variante de réalisation de la figure 10, les trous 122 diffèrent de ceux de la figure 9 en ce que leur section varie le long de leur longueur. Chacun des trous 122 comporte par exemple trois tronçons 122i, 122j, 122k ayant des diamètres différents, à savoir un tronçon médian 122j de diamètre D7 et deux tronçons d'extrémité 122i, 122k de diamètres respectifs D6 et D8. Le tronçon médian 122j est entre les tronçons d'extrémité 122i, 122k, avec D6<D7<D8. Le tronçon d'extrémité 122k de plus grand diamètre D8 débouche dans l'espace 21a, 21b correspondant.

La présente invention concerne également un réducteur 6 tel que décrit dans ce qui précède, qui comprend ce type de palier lisse 110, ainsi qu'une turbomachine 1 telle qu'illustrée à la figure 1 comportant un tel réducteur 6.

## Revendications

1. Palier lisse (110) pour un satellite d'un réducteur mécanique (6) de turbomachine (1), en particulier d'aéronef, ce palier lisse (110) étant formé d'une seule pièce et comportant :
- un corps cylindrique creux (20b) qui comprend un axe (Y) et qui définit intérieurement une cavité (10c) destinée à recevoir de l'huile,
- une paroi annulaire (20a) qui s'étend autour de l'axe (Y) et du corps creux (20b) et qui comprend une surface cylindrique externe de guidage (25a),
- une âme annulaire (20c) qui s'étend autour de l'axe (Y), entre le corps (20b) et la paroi (20a), et qui relie le corps (20b) à la paroi (20a), cette âme annulaire (20c) ayant une longueur (L2) le long de l'axe (Y) qui est inférieure à une longueur (L1) de la paroi (20a) de sorte que la paroi (20a) délimite autour du corps (20b) un espace annulaire (21a) en avant de l'âme (20c) et un espace annulaire (21b) en arrière de l'âme (20c), et
- des orifices (10d) de passage d'huile formés dans le corps (20b), l'âme (20c) et la paroi (20a) et s'étendant depuis la cavité (10c) jusqu'à la surface de guidage (25a),
**caractérisé en ce qu'**il comprend au moins une rangée annulaire de trous d'allègement (122) dans ladite âme (20c), ces trous (122) étant régulièrement répartis tout autour de l'axe (Y).

2. Palier lisse (110) selon la revendication 1, dans lequel l'âme (20c) comprend une seule rangée annulaire de trous d'allègement (122) qui traversent toute la longueur (L2) de l'âme (20c) et débouchent dans lesdits espaces (21a, 21b).

3. Palier lisse (110) selon la revendication 1, dans lequel l'âme (20c) comprend une première rangée annulaire de trous borgnes d'allègement (122) qui sont formés sur un premier côté de l'âme (20c), avant ou arrière, et qui débouchent dans un premier desdits espaces (21a), et une seconde rangée annulaire de trous borgnes d'allègement (122) qui sont formés sur un second côté opposé de l'âme (20c) et qui débouchent dans un second desdits espaces (21b).

4. Palier lisse (110) selon l'une des revendications 1 à 3, dans lequel les trous (122) ont une section constante sur toute leur longueur.

5. Palier lisse (110) selon l'une des revendications 1 à 3, dans lequel les trous (122) ont une section qui varie le long de leur longueur, chacun des trous (122) comportant par exemple au moins deux ou trois tronçons (122a, 122b, 122c, 122i, 122j, 122k) ayant des diamètres différents.

6. Palier lisse (110) selon l'une des revendications précédentes, dans lequel les trous (122) ont un diamètre D2 compris entre 0,01.D1 et 0,1.D1, D1 étant le diamètre de la surface de guidage.

7. Palier lisse (110) selon l'une des revendications précédentes, dans lequel les trous ont un diamètre D2 compris entre 0,008.L3 et 0,1 .L3, L3 étant la longueur du palier (110) mesurée le long de l'axe (Y).

8. Palier lisse (110) selon l'une des revendications précédentes, dans lequel les trous (122) ont en section une forme circulaire, oblongue ou elliptique.

9. Palier lisse (110) selon l'une des revendications précédentes, dans lequel les trous (122) sont parallèles à l'axe (Y) ou inclinés d'un angle maximal de +/-10° par rapport à cet axe (Y).

10. Réducteur mécanique (6) pour une turbomachine (1), en particulier d'aéronef, ce réducteur comportant :
- un solaire (7) ayant un axe de rotation (X),
- une couronne (9) qui s'étend autour du solaire (7),
- des satellites (8) qui sont engrenés avec le solaire (7) et la couronne (9) et qui sont chacun montés sur un palier lisse (110) selon l'une des revendications précédentes, les paliers lisses (110) étant fixés à un porte-satellites (10), et
- un distributeur (13) d'huile de lubrification qui est configuré pour alimenter en huile les cavités (10c) desdits paliers.

11. Turbomachine (1), en particulier d'aéronef, comportant un réducteur mécanique (6) selon la revendication 10.
